(19) Europäisches Patentamt
European Patent Office
Office européen des brevets

(11) **EP 3 468 247 A1**

(12) **EUROPEAN PATENT APPLICATION**
published in accordance with Art. 153(4) EPC

(43) Date of publication:
**10.04.2019 Bulletin 2019/15**

(21) Application number: **17819108.6**

(22) Date of filing: **15.06.2017**

(51) Int Cl.:
**H04W 28/02** (2009.01)

(86) International application number:
**PCT/CN2017/088509**

(87) International publication number:
**WO 2018/001111 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.06.2016 CN 201610489136**

(71) Applicant: **Huawei Technologies Co., Ltd.**
**Longgang District**
**Shenzhen, Guangdong 518129 (CN)**

(72) Inventors:
• **WANG, Da**
**Shenzhen**
**Guangdong 518129 (CN)**
• **LIU, Bin**
**Shenzhen**
**Guangdong 518129 (CN)**
• **TENNY, Nathan Edward**
**Shenzhen**
**Guangdong 518129 (CN)**
• **OUYANG, Guowei**
**Shenzhen**
**Guangdong 518129 (CN)**
• **WANG, Jian**
**Shenzhen**
**Guangdong 518129 (CN)**

(74) Representative: **Gill Jennings & Every LLP**
**MTH**
**The Broadgate Tower**
**20 Primrose Street**
**London EC2A 2ES (GB)**

(54) **DATA TRANSMISSION METHOD AND DEVICE**

(57) The present invention provides a data transmission method and a device. During downlink data transmission, a network side device generates second information based on first information and a second identifier and sends the second information to a second device, and in the sending process, the second information passes through a first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

FIG. 1

EP 3 468 247 A1

**Description**

**TECHNICAL FIELD**

Embodiments of the present invention relate to a communications technology, and in particular, to a data transmission method and a device.

**BACKGROUND**

Currently, in addition to being capable of accessing a network by using a network side device (for example, a base station), user equipment may further access the network by using another user equipment. In the process, the user equipment providing a network access function to the another user equipment is a first device, for example, a high-capability device such as a smartphone, and the user equipment accessing the network by using the first device is a second device, for example, a low-capability device such as a wearable device. Usually, one first device may be connected to a plurality of second devices.

In a data transmission process, a second device sends uplink data to the network side device by using the first device, or a second device receives, by using the first device, downlink data sent by the network side device. For the network side device, uplink data is from the first device, and the network side device cannot determine whether the uplink data is specifically sent by a second device or the first device. Similarly, for the network side device, downlink data is sent to the first device, and the network side device cannot determine whether the downlink data is specifically sent to a second device or the first device. In the process, the network side device processes data of the second device as data of the first device, so that network quality of service obtained by the second device is the same as network quality of service provided by the network side device to the first device. The network quality of service includes quality of service (Quality of Service, QoS), security (Security) performance, a delay, and the like.

In the foregoing data transmission process, the network side device uses the data of the second device as the data of the first device, thereby providing the same network quality of service to the first device and the second device. However, different second devices have different requirements for network quality of service. Therefore, how to distinguish the data of the first device and the data of the second device is actually a problem to be urgently resolved in the industry.

**SUMMARY**

Embodiments of the present invention provide a data transmission method and a device, to distinguish data of a first device and data of a second device, or data of a second device and data of another second device.

According to a first aspect, an embodiment of the present invention provides a data transmission method. The method is described from the perspective of a network side device. In the method, during downlink data transmission, the network side device generates second information based on first information and a second identifier and sends the second information to a second device, and in the sending process, the second information passes through a first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

In a possible implementation, the generating, by a network side device, second information based on first information and a second identifier includes:

scrambling, by the network side device, the first information based on the second identifier to obtain the second information.

In a possible implementation, the scrambling, by the network side device, the first information based on the second identifier to obtain the second information includes:

generating, by the network side device, a first sequence based on the second identifier; and
scrambling, by the network side device, the first information by using the first sequence to obtain the second information.

In a possible implementation, the scrambling, by the network side device, the first information based on the second identifier to obtain the second information includes:

generating, by the network side device, a second sequence based on the second identifier and a first identifier of the first device; and

scrambling, by the network side device, the first information by using the second sequence to obtain the second information.

According to the foregoing various possible implementations, the data of the first device and the data of the second device may be distinguished by scrambling the first information.

In a possible implementation, the scrambling, by the network side device, the first information based on the second identifier to obtain the second information includes:

scrambling, by the network side device, a cyclic redundancy code CRC of the first information based on the second identifier to obtain the second information.

According to the foregoing possible implementations, the data of the first device and the data of the second device may be distinguished by adding a mask to a CRC of a PDSCH. In the manner, power consumption of the first device may be reduced, and complexity of distinguishing the data of the first device and the data of the second device may be reduced.

In a possible implementation, the generating, by a network side device, second information based on first information and a second identifier includes:

adding, by the network side device, the second identifier to the first information to generate the second information.

In a possible implementation, the adding, by the network side device, the second identifier to the first information to generate the second information includes:

adding, by the network side device, the second identifier to the downlink data information to generate the second information.

According to the foregoing possible implementations, a second device or the first device from which the downlink data is may be explicitly indicated.

In a possible implementation, the first information is specifically downlink control information, and the adding, by the network side device, the second identifier to the first information to generate the second information includes:

adding, by the network side device, the second identifier to the downlink control information to generate the second information.

According to the foregoing possible implementations, a second device or the first device to which a data channel belongs is indicated by using a control channel.

In a possible implementation, before the sending, by the network side device, the second information to a second device, the method further includes:

allocating, by the network side device, an independent resource to the second device; and
the sending, by the network side device, the second information to a second device includes:
sending, by the network side device, the second information to the second device by using the independent resource.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a second aspect, an embodiment of the present invention provides a data transmission method, including:

receiving, by a second device, second information sent by a network side device, where the second information is generated by the network side device based on first information and a second identifier; and
processing, by the second device, the second information, where
the second device is a device accessing the network side device by using a first device, the first device is a device accessing the network side device, and the second identifier is an identifier of the second device.

In a possible implementation, the second information is obtained by scrambling, by the network side device, the first information based on the second identifier.

In a possible implementation, the second information is specifically obtained by generating, by the network side device, a first sequence based on the second identifier and scrambling the first information by using the first sequence.

In a possible implementation, the second information is obtained by generating, by the network side device, a second sequence based on the second identifier and a first identifier of the first device and scrambling the first information by using the second sequence.

In a possible implementation, the second information is obtained by scrambling, by the network side device, a cyclic redundancy code CRC of the first information based on the second identifier.

In a possible implementation, the second information is generated by adding, by the network side device, the second identifier to the first information.

In a possible implementation, the first information is specifically downlink data information, and the second information is generated by adding, by the network side device, the second identifier to the downlink data information.

In a possible implementation, the first information is specifically downlink control information, and the second information is generated by adding, by the network side device, the second identifier to the downlink control information.

In a possible implementation, the receiving, by a second device, second information sent by a network side device includes:

receiving, by the second device, the second information sent by the network side device by using an independent resource, where the independent resource is allocated by the network side device to the second device.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a third aspect, an embodiment of the present invention provides a data transmission method, including:

generating, by a first device, fourth information based on third information and a second identifier; and
sending, by the first device, the fourth information to a network side device, where
the third information is information generated by a second device, the second device is a device accessing the network side device by using the first device, the first device is a device accessing the network side device, and the second identifier is an identifier of the second device.

In a possible implementation, the generating, by a first device, fourth information based on third information and a second identifier includes:

scrambling, by the first device, the third information based on the second identifier to obtain the fourth information.

In a possible implementation, the scrambling, by the first device, the third information based on the second identifier to obtain the fourth information includes:

generating, by the first device, a third sequence based on the second identifier; and
scrambling, by the first device, the third information by using the third sequence to obtain the fourth information.

In a possible implementation, the scrambling, by the first device, the third information based on the second identifier to obtain the fourth information includes:

generating, by the first device, a fourth sequence based on the second identifier and a first identifier of the first device; and
scrambling, by the first device, the third information by using the fourth sequence to obtain the fourth information.

In a possible implementation, the scrambling, by the first device, the third information based on the second identifier to obtain the fourth information includes:

scrambling, by the first device, a cyclic redundancy code CRC of the third information based on the second identifier to obtain the fourth information.

In a possible implementation, the generating, by a first device, fourth information based on third information and a second identifier includes:

adding, by the first device, the second identifier to the third information to generate the fourth information.

In a possible implementation, the third information is specifically uplink data information, and the adding, by the first device, the second identifier to the third information to generate the fourth information includes:

adding, by the first device, the second identifier to the uplink data information to generate the fourth information.

In a possible implementation, the third information is specifically uplink control information or uplink scheduling information, and the adding, by the first device, the second identifier to the third information to generate the fourth information includes:

adding, by the first device, the second identifier to the uplink control information or the uplink scheduling information to generate the fourth information.

In a possible implementation, the sending, by the first device, the fourth information to a network side device includes:

sending, by the first device, the fourth information to the network side device by using an independent resource, where the independent resource is allocated by the network side device to the second device.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a fourth aspect, an embodiment of the present invention provides a data transmission method, including:

receiving, by a network side device, fourth information sent by a first device, where the fourth information is generated by the first device based on third information and a second identifier; and
processing, by the network side device, the fourth information, where
the third information is information generated by a second device, the second device is a device accessing the network side device by using the first device, the first device is a device accessing the network side device, and the second identifier is an identifier of the second device.

In a possible implementation, the fourth information is obtained by scrambling, by the first device, the third information based on the second identifier.

In a possible implementation, the fourth information is specifically obtained by generating, by the first device, a third sequence based on the second identifier and scrambling the third information by using the third sequence.

In a possible implementation, the fourth information is specifically obtained by generating, by the first device, a fourth sequence based on the second identifier and a first identifier of the first device and scrambling the third information by using the fourth sequence.

In a possible implementation, the fourth information is specifically obtained by scrambling, by the first device, a cyclic redundancy code CRC of the third information based on the second identifier.

In a possible implementation, the fourth information is generated by adding, by the first device, the second identifier to the third information.

In a possible implementation, the third information is specifically uplink data information, and the fourth information is specifically generated by adding, by the first device, the second identifier to the uplink data information.

In a possible implementation, the third information is specifically uplink control information or uplink scheduling information, and the fourth information is specifically generated by adding, by the first device, the second identifier to the uplink control information or the uplink scheduling information.

In a possible implementation, before the receiving, by a network side device, fourth information sent by a first device, the method further includes:

allocating, by the network side device, an independent resource to the second device; and
the receiving, by a network side device, fourth information sent by a first device includes:
receiving, by the network side device, the fourth information sent by the second device by using the independent resource.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a fifth aspect, an embodiment of the present invention provides a network side device, including:

a processing module, configured to generate second information based on first information and a second identifier; and
a transceiver module, configured to send the second information to a second device, where the second information passes through a first device, where the second device is a device accessing the network side device by using the first device, the first device is a device accessing the network side device, and the second identifier is an identifier of the second device.

In a possible implementation, the processing module is specifically configured to scramble the first information based on the second identifier to obtain the second information.

In a possible implementation, the processing module is specifically configured to generate a first sequence based on the second identifier; and scramble the first information by using the first sequence to obtain the second information.

In a possible implementation, the processing module is specifically configured to generate a second sequence based on the second identifier and a first identifier of the first device; and scramble the first information by using the second sequence to obtain the second information.

In a possible implementation, the processing module is specifically configured to scramble a cyclic redundancy code CRC of the first information based on the second identifier to obtain the second information.

In a possible implementation, the processing module is specifically configured to add the second identifier to the first information to generate the second information.

In a possible implementation, the first information is specifically downlink data information, and the processing module is specifically configured to add the second identifier to the downlink data information to generate the second information.

In a possible implementation, the first information is specifically downlink control information, and the processing module is specifically configured to add the second identifier to the downlink control information to generate the second information.

In a possible implementation, the processing module is further configured to allocate an independent resource to the second device before the transceiver module sends the second information to the second device; and

the transceiver module is specifically configured to send the second information to the second device by using the independent resource.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a sixth aspect, an embodiment of the present invention provides a device, where the device is a second device, and the second device includes:

a transceiver module, configured to receive second information sent by a network side device, where the second information is generated by the network side device based on first information and a second identifier; and

a processing module, configured to process the second information, where the second device is a device accessing the network side device by using a first device, the first device is a device accessing the network side device, and the second identifier is an identifier of the second device.

In a possible implementation, the second information is obtained by scrambling, by the network side device, the first information based on the second identifier.

In a possible implementation, the second information is specifically obtained by generating, by the network side device, a first sequence based on the second identifier and scrambling the first information by using the first sequence.

In a possible implementation, the second information is obtained by generating, by the network side device, a second sequence based on the second identifier and a first identifier of the first device and scrambling the first information by using the second sequence.

In a possible implementation, the second information is obtained by scrambling, by the network side device, a cyclic redundancy code CRC of the first information based on the second identifier.

In a possible implementation, the second information is generated by adding, by the network side device, the second identifier to the first information.

In a possible implementation, the first information is specifically downlink data information, and the second information is generated by adding, by the network side device, the second identifier to the downlink data information.

In a possible implementation, the first information is specifically downlink control information, and the second information is generated by adding, by the network side device, the second identifier to the downlink control information.

In a possible implementation, the transceiver module is specifically configured to receive the second information sent by the network side device by using an independent resource, where the independent resource is allocated by the network side device to the second device.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a seventh aspect, an embodiment of the present invention provides a device, where the device is a first device, and the first device includes:

a processing module, configured to generate fourth information based on third information and a second identifier; and

a transceiver module, configured to send the fourth information to a network side device, where

the third information is information generated by a second device, the second device is a device accessing the network side device by using the first device, the first device is a device accessing the network side device, and the second identifier is an identifier of the second device.

In a possible implementation, the processing module is specifically configured to scramble the third information based on the second identifier to obtain the fourth information.

In a possible implementation, the processing module is specifically configured to generate a third sequence based on the second identifier; and scramble the third information by using the third sequence to obtain the fourth information.

In a possible implementation, the processing module is specifically configured to generate a fourth sequence based on the second identifier and a first identifier of the first device; and scramble the third information by using the fourth sequence to obtain the fourth information.

In a possible implementation, the processing module is specifically configured to scramble a cyclic redundancy code CRC of the third information based on the second identifier to obtain the fourth information.

In a possible implementation, the processing module is specifically configured to add the second identifier to the third information to generate the fourth information.

In a possible implementation, the third information is specifically uplink data information, and the processing module is specifically configured to add the second identifier to the uplink data information to generate the fourth information.

In a possible implementation, the third information is specifically uplink control information or uplink scheduling information, and the processing module is specifically configured to add the second identifier to the uplink control information or the uplink scheduling information to generate the fourth information.

In a possible implementation, the transceiver module is specifically configured to send the fourth information to the network side device by using an independent resource, where the independent resource is allocated by the network side device to the second device.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to an eighth aspect, an embodiment of the present invention provides a network side device, including:

a transceiver module, configured to receive fourth information sent by a first device, where the fourth information is generated by the first device based on third information and a second identifier; and

a processing module, configured to process the fourth information, where

the third information is information generated by a second device, the second device is a device accessing the network side device by using the first device, the first device is a device accessing the network side device, and the second identifier is an identifier of the second device.

In a possible implementation, the fourth information is obtained by scrambling, by the first device, the third information based on the second identifier.

In a possible implementation, the fourth information is specifically obtained by generating, by the first device, a third sequence based on the second identifier and scrambling the third information by using the third sequence.

In a possible implementation, the fourth information is specifically obtained by generating, by the first device, a fourth sequence based on the second identifier and a first identifier of the first device and scrambling the third information by using the fourth sequence.

In a possible implementation, the fourth information is specifically obtained by scrambling, by the first device, a cyclic redundancy code CRC of the third information based on the second identifier.

In a possible implementation, the fourth information is generated by adding, by the first device, the second identifier to the third information.

In a possible implementation, the third information is specifically uplink data information, and the fourth information is specifically generated by adding, by the first device, the second identifier to the uplink data information.

In a possible implementation, the third information is specifically uplink control information or uplink scheduling information, and the fourth information is specifically generated by adding, by the first device, the second identifier to the uplink control information or the uplink scheduling information.

In a possible implementation, the processing module is further configured to allocate an independent resource to the second device before the transceiver module receives the fourth information sent by the first device; and the transceiver module is specifically configured to receive the fourth information sent by the second device by using the independent resource.

In a possible implementation, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

According to a ninth aspect, an embodiment of the present invention provides a network side device, including: a processor, a memory, a communications interface, and a system bus, where the memory and the communications interface are connected to the processor by using the system bus and complete mutual communication, the memory is configured to store a computer executable instruction, the communications interface is configured to communicate with another device, and the processor is configured to run the computer executable instruction, to enable the network side device to perform the method implemented according to the first aspect or each possible implementation of the first aspect.

According to a tenth aspect, an embodiment of the present invention provides a device, where the device is a second device, and the second device includes: a processor, a memory, a communications interface, and a system bus, where the memory and the communications interface are connected to the processor by using the system bus and complete mutual communication, the memory is configured to store a computer executable instruction, the communications interface is configured to communicate with another device, and the processor is configured to run the computer executable instruction, to enable the second device to perform the method implemented according to the second aspect or each possible implementation of the second aspect.

According to an eleventh aspect, an embodiment of the present invention provides a device, where the device is a first device, and the first device includes:
a processor, a memory, a communications interface, and a system bus, where the memory and the communications interface are connected to the processor by using the system bus and complete mutual communication, the memory is configured to store a computer executable instruction, the communications interface is configured to communicate with another device, and the processor is configured to run the computer executable instruction, to enable the first device to perform the method implemented according to the third aspect or each possible implementation of the third aspect.

According to a twelfth aspect, an embodiment of the present invention provides a network side device, including: a processor, a memory, a communications interface, and a system bus, where the memory and the communications interface are connected to the processor by using the system bus and complete mutual communication, the memory is configured to store a computer executable instruction, the communications interface is configured to communicate with another device, and the processor is configured to run the computer executable instruction, to enable the network side device to perform the method implemented according to the fourth aspect or each possible implementation of the fourth aspect.

In the data transmission method and the device provided in the embodiments of the present invention, during downlink data transmission, the network side device generates the second information based on the first information and the second identifier and sends the second information to the second device, and in the sending process, the second information passes through the first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

## BRIEF DESCRIPTION OF DRAWINGS

FIG. 1 is a schematic diagram of a network architecture to which a data transmission method according to the present invention is applicable;
FIG. 2 is a signaling diagram of Embodiment 1 of a data transmission method according to the present invention;
FIG. 3 is a signaling diagram of Embodiment 2 of a data transmission method according to the present invention;
FIG. 4 is a schematic structural diagram of Embodiment 1 of a network side device according to the present invention;
FIG. 5 is a schematic structural diagram of Embodiment 1 of a second device according to the present invention;
FIG. 6 is a schematic structural diagram of Embodiment 1 of a first device according to the present invention;
FIG. 7 is a schematic structural diagram of Embodiment 2 of a network side device according to the present invention;
FIG. 8 is a schematic structural diagram of Embodiment 3 of a network side device according to the present invention;
FIG. 9 is a schematic structural diagram of Embodiment 2 of a second device according to the present invention;

FIG. 10 is a schematic structural diagram of Embodiment 2 of a first device according to the present invention; and

FIG. 11 is a schematic structural diagram of Embodiment 4 of a network side device according to the present invention.

**DESCRIPTION OF EMBODIMENTS**

Currently, under a communications architecture in which a second device accesses a network by using a first device, in a data transmission process, a network side device uses data of the second device as data of the first device, thereby providing the same network quality of service to the first device and the second device. However, different second devices have different requirements for network quality of service. For a plurality of second devices accessing a network by using a same first device, requirements of the second devices for network quality of service are different from a requirement of the first device for network quality of service, or even respective requirements of the second devices for network quality of service are different. For example, QoS of a second device supporting a real-time service is different from that of a second device supporting a non-real-time service, a health-based second device requires a higher security level, a second device sending an emergency service requires a lower transmission delay, and so on. If the same network quality of service continues to be provided to the second devices and the first device, when network quality of service of the first device is low, the second devices having high requirements for network quality of service cannot be satisfied; or when network quality of service of the first device is high, because not all second devices require relatively high network quality of service, a resource waste is caused.

In view of this, embodiments of the present invention provide a data transmission method and a device, to provide network quality of service different from that of a first device to a second device by distinguishing data of the first device and data of the second device.

Technologies described in this specification may be applied to various communications systems, for example, current 2G and 3G communications systems and a next-generation communications system, for example, a Global System for Mobile Communications (Global System for Mobile communications, GSM), a Code Division Multiple Access (Code Division Multiple Access, CDMA) system, a Time Division Multiple Access (Time Division Multiple Access, TDMA) system, a Wideband Code Division Multiple Access (Wideband Code Division Multiple Access Wireless, WCDMA) system, a Frequency Division Multiple Access (Frequency Division Multiple Addressing, FDMA) system, an Orthogonal Frequency-Division Multiple Access (Orthogonal Frequency-Division Multiple Access, OFDMA) system, a single-carrier FDMA (SC-FDMA) system, a General Packet Radio Service (General Packet Radio Service, GPRS) system, a Long Term Evolution (Long Term Evolution, LTE) system, an E-UTRA system, and other communications systems of this type.

A device in this application, regardless of a first device or a second device, may be a wired terminal or a wireless terminal, where the wireless terminal may be a device providing voice and/or data connectivity to a user, a handheld device having a wireless connection function, or another processing device connected to a wireless modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), a user device (User Device), or user equipment (User Equipment).

A network side device in this application may be a base station, an access point (Access Point, AP), or the like. The base station may be a device that communicates with the wireless terminal over an air interface in an access network by using one or more sectors. The base station may be configured to mutually convert a received over-the-air frame and an IP packet and serve as a router between the wireless terminal and a remaining portion of the access network, where the remaining portion of the access network may include an Internet protocol (IP) network. The base station may coordinate attribute management of the air interface. For example, the base station may be a base transceiver station (BTS, Base Transceiver Station) in GSM or the CDMA, may also be a NodeB (NodeB) in WCDMA, and may further be an evolved NodeB (NodeB, eNB, or e-NodeB, evolutional Node B) in LTE. This is not limited in this application.

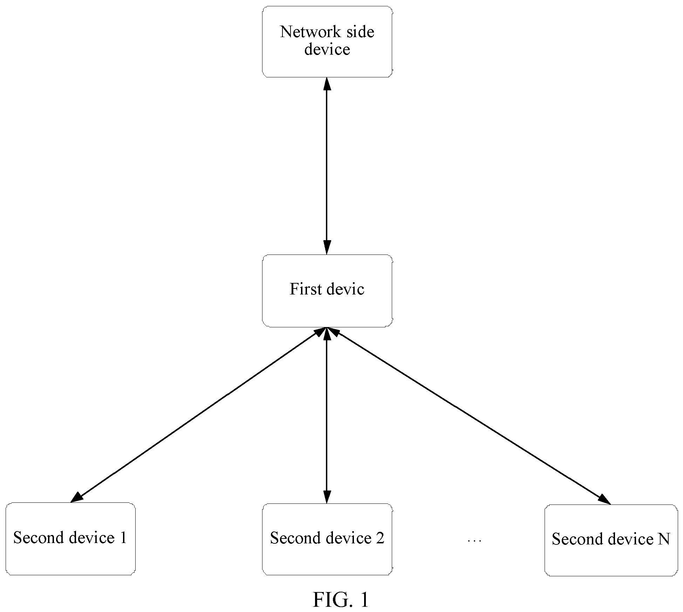

For ease and clearness of description, the technical solutions of the present invention are described below in detail by using an example in which a system architecture is specifically an LTE system and a base station is specifically an eNB. For details, refer to FIG. 1.

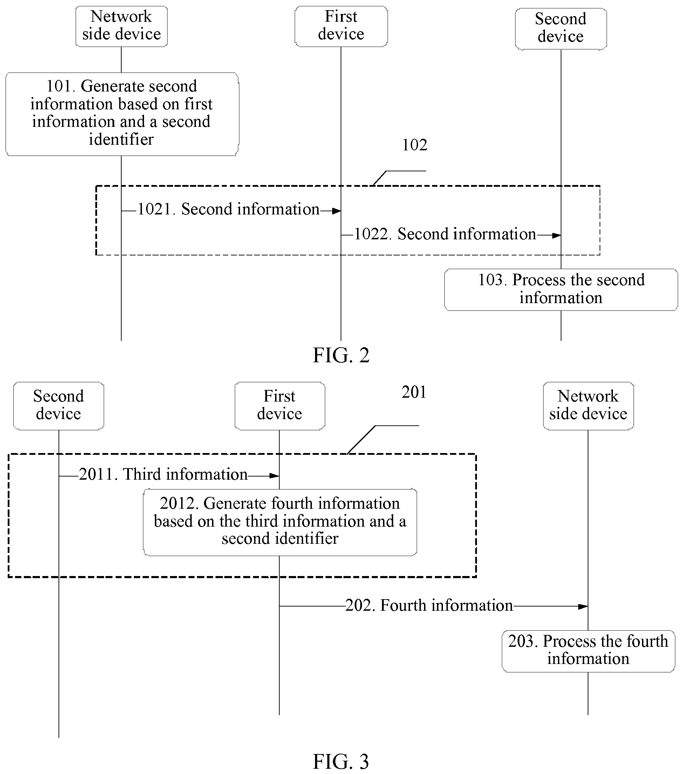

FIG. 1 is a schematic diagram of a network architecture to which a data transmission method according to the present invention is applicable. As shown in FIG. 1, in the network architecture, a first device is a device accessing a network side device, the first device is connected to N second devices, where N is greater than or equal to 1 and is an integer, and the second devices access the network side device by using the first device. The first device is a high-capability device such as a smartphone, and may be used as a relay node helping a low-capability device access the network side device, and the second device is a low-capability device such as a wearable device. The first device performs short-range communication with the second device by using infrared, Bluetooth, or the like, and the first device communicates with the network side device by using a mobile network or the like. The data transmission method of the present invention is described below in detail respectively from two perspectives of downlink data transmission and uplink data transmission based on FIG. 1. For details, refer to FIG. 2 and FIG. 3.

FIG. 2 is a signaling diagram of Embodiment 1 of a data transmission method according to the present invention. In this embodiment, specifically, the data transmission method of the present invention is described in detail from the perspective of downlink data transmission. This embodiment includes the following steps.

101. A network side device generates second information based on first information and a second identifier.

In this embodiment of the present invention, one first device may be connected to a plurality of second devices, the connection relationship may be referred to as a pairing relationship between the first device and the second devices, and both the network side device and the first device record the pairing relationship. That is, both the network side device and the first device learn an identifier of a second device paired with the first device.

In this step, the first information is information that the network side device needs to send to the second device, and may be understood as information that the network side device needs to send to the second device by using the first device. If the current sending manner is used, the network side device directly sends the first downlink information to the first device, and subsequently the first device does not learn the second device to which the first information belongs, or does not learn whether the first information is information of the first device. However, in this embodiment of the present invention, the network side device generates the second information based on the first information and the second identifier, for example, by scrambling or indicating the first information by using the identifier of the second device.

102. The network side device sends the second information to a second device, where the second information passes through a first device.

In this step, the network side device sends the generated second information to the second device. In a specific sending process, the network side device first sends the second information to the first device, and the first device forwards the second information to the second device. In the process, the second information is generated by the network side device based on the first information and the second identifier of the second device. Therefore, when the second information reaches the first device, the first device can identify the second device that is a destination of the second information. Additionally, when the network side device sends information belonging to the first device to the first device, the information may be encrypted by using an identifier of the first device, so that the first device identifies that the information is information of the first device.

To sum up, it can be learned that, step 102 includes two substeps.

1021. The network side device sends the second information to the first device.

In this step, a plurality of second devices may be connected to the first device. Therefore, when receiving the second information, the first device may determine a destination of the second information in at least one second device based on the second information. For example, the first device performs blind detection on the second information separately by using identifiers of the second devices, and a second device corresponding to an identifier through which blind detection is performed successfully is a final destination of the second information. For another example, the first device parses the second information, and obtains, through parsing, an identifier of a second device carried in the second information, and the second device corresponding to the identifier is a final destination of the second information.

1022. The first device sends the second information to the second device.

103. The second device processes the second information.

In this step, after receiving the second information forwarded by the first device, the second device processes the second device.

In the data transmission method provided in this embodiment of the present invention, during downlink data transmission, the network side device generates the second information based on the first information and the second identifier and sends the second information to the second device, and in the sending process, the second information passes through the first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

In the foregoing embodiment, before sending the second information to the second device, the network side device further allocates an independent resource to the second device. Correspondingly, when sending the second information, the network side device sends the second information to the second device by using the independent resource. The independent resource is, for example, an independent data radio bearer (Data Radio Bearer, DRB). The network side device may allocate an independent resource to each second device, and the independent resource is used to transmit only uplink information or downlink information of the corresponding second device.

Specifically, the network side device first allocates an independent resource to the second device, and sends the second information to the second device by using the independent resource. In a resource allocation process, if the second device is a second device whose requirement for network quality of service is not high, the network side device may send the second information to the second device by using an independent resource whose quality is relatively poor, that is, the quality of the independent resource allocated by the network side device to the second device is relatively poor; or if the second device is a second device whose requirement for network quality of service is relatively high, the network side device may send the second information to the second device by using an independent resource whose quality is relatively good, that is, the quality of the independent resource allocated by the network side device to the second device is relatively good. Certainly, when a resource allocated by the network device to the first device is sufficient and has relatively good quality, the network side device may not need to allocate an independent resource to the second device, but send the second information by using the resource of the first device. In the process, when the network side device transmits the downlink information of the second device, after the downlink information is processed by using the identifier of the second device, the downlink information is sent to the first device by using the independent resource configured by the network side device for the second device, so that the first device may identify the second device to which the downlink data is specifically sent. In this way, the data of the first device and the data of the second device are distinguished, and the data of the second device is sent by using a resource independent of the data of the first device, so that network quality of service of the second device is different from network quality of service of the first device, to satisfy different requirements of different second devices for network quality of service.

In the foregoing embodiment, the identifier of the second device may be, for example, a cell-radio network temporary identifier (Cell-Radio Network Temporary Identifier, C-RNTI) of the second device, a temporary mobile subscriber identity (Serving-Temporary Mobile Subscriber Identity, S-TMSI) of the second device, an identifier allocated by the network side device to the second device, an identifier allocated by the first device to the second device, a preconfigured identifier of the second device, or an identifier of the second device relative to the first device. How the network side device processes first downlink information by using the identifier of the second device to obtain second downlink information is described below in detail. For details of scrambling, by the network side device, the first information based on the second identifier to obtain the second information, refer to Manner 1 and Manner 2; or, for details of adding, by the network side device, the second identifier to the first information to generate the second information, refer to Manner 3 and Manner 4.

Manner 1. The network side device generates a first sequence based on the second identifier, and scrambles the first information by using the first sequence to obtain the second information; or the network side device generates a second sequence based on the second identifier and a first identifier of the first device, and the network side device scrambles the first information by using the second sequence to obtain the second information.

For example, the first information is specifically a PDSCH. In this case, the network side device generates a first sequence based on the second identifier, and scrambles the first information by using the first sequence to obtain the second information.

Specifically, the network side device generates an initialization scrambling code sequence of the PDSCH, that is, a first sequence based on the second identifier, and scrambles the first information by using the first sequence to obtain the second information.

Currently, based on a record of section 6.3.1 of 36.211 of an LTE standard, when a PDSCH is scrambled, a C-RNTI of the first device is used. If an initialization scrambling code sequence is $C_{init}$,

$$C_{init} = \begin{cases} n_{RNTI} \cdot 2^{14} + q \cdot 2^{13} + \lfloor n_s / 2 \rfloor \cdot 2^9 + N_{ID}^{cell} \ for PDSCH \\ \lfloor n_s / 2 \rfloor \cdot 2^9 + N_{ID}^{MBSFN} \ for PMCH \end{cases} \quad (1)$$

where $n_{RNTI}$ is the C-RNTI of the first device, $n_s$ is a timeslot, $q$ is a code word, $q \in \{0, 1\}$, and $N_{ID}^{cell}$ indicates a cell identifier.

In this embodiment, the C-RNTI of the first device may be replaced with the identifier of the second device, that is, the second identifier, thereby obtaining a formula (2), an initialization scrambling code sequence is determined based on the formula (2), and the initialization scrambling code sequence is the first sequence. Then, the network side device scrambles the first information by using the first sequence to obtain the second information.

$$C_{init} = \begin{cases} (WD\ ID) \cdot 2^{14} + q \cdot 2^{13} + \lfloor n_s / 2 \rfloor \cdot 2^9 + N_{ID}^{cell} & forPDSCH \\ \lfloor n_s / 2 \rfloor \cdot 2^9 + N_{ID}^{MBSFN} & forPMCH \end{cases} \qquad (2)$$

Additionally, an initialization scrambling code sequence may be further determined with reference to the identifier of the first device and the identifier of the second device, as shown in a formula (3), and the initialization scrambling code sequence is the second sequence. Then, the network side device scrambles the first information by using the second sequence to obtain the second information.

$$C_{init} = \begin{cases} (WD\ ID + n_{RNTI}) \cdot 2^{14} \cdot q \cdot 2^{13} + \lfloor n_s / 2 \rfloor \cdot 2^9 + N_{ID}^{cell} & forPDSCH \\ \lfloor n_s / 2 \rfloor \cdot 2^9 + N_{ID}^{MBSFN} & forPMCH \end{cases} \qquad (3)$$

In the formula (3), a description is performed by using an example in which summation is performed on *WD ID* and $n_{RNTI}$, but the present invention is not limited thereto. In another feasible implementation, subtraction, OR, XOR, or the like may alternatively be performed on *WD ID* and $n_{RNTI}$.

After receiving the second information, the first device performs blind detection on an initialization scrambling code sequence by using an identifier of at least one second device, and a second device corresponding to an identifier through which blind detection is performed successfully is used as a final destination of the second information.

Additionally, it should be noted that, in addition to scrambling a PDSCH of the second device, the network side device also scrambles a PDSCH of the first device similarly. In this way, after receiving an initialization scrambling code sequence, the first device performs blind detection on the initialization scrambling code sequence by separately using the identifier of the first device and an identifier of each second device, and determines, based on an identifier through which blind detection is performed successfully, a second device or the first device to which the initialization scrambling code sequence belongs

Based on Manner 1, the data of the first device and the data of the second device may be distinguished by scrambling the PDSCH.

Manner 2. The network side device scrambles a cyclic redundancy code CRC of the first information based on the second identifier to obtain the second information; the network side device generates a fifth sequence based on the second identifier, and the network side device scrambles the cyclic redundancy code CRC of the first information by using the fifth sequence to obtain the second information; or the network side device generates a sixth sequence based on the second identifier and a first identifier of the first device, and the network side device scrambles the cyclic redundancy code CRC of the first information by using the sixth sequence to obtain the second information.

For example, the first information is specifically a PDSCH. In this case, the network side device may add a mask to or scramble a cyclic redundancy code CRC of the PDSCH by using the identifier of the second device, that is, the second identifier, thereby obtaining the second information.

Specifically, the network side device adds a mask to the cyclic redundancy code CRC of the PDSCH by using the identifier of the second device, and the PDSCH to which the mask is added is the second information.

Currently, no mask (mask) is required during downlink data transmission. For example, parity bits of the current CRC are $p_0$, $p_1$, $p_2$, $p_3$,..., $p_{L-1}$, and the parity bits are marked as $CRC_{parity}$.

In this embodiment of the present invention, an ID of the corresponding device is added for a parity bit. For example, when the PDSCH is the PDSCH of the second device, the CRC is $CRC_{mask}$ = $CRC_{parity}$ (24 bits) + WD ID after a mask is added, where WD ID is, for example, 16 bits (bits), and if WD ID is less than 24 bits, zeros are added in the front, in the rear, or in the middle. For another example, when the PDSCH is the PDSCH of the first device, $CRC_{mask}$ = $CRC_{parity}$ (24 bits) + *UE* ID, where UE ID is the identifier of the first device.

It should be noted that, although in the foregoing, the mask is added to the CRC by performing summation on $CRC_{parity}$ and an identifier of a device (the first device or the second device), but the present invention is not limited thereto. In another feasible implementation, subtraction, OR, XOR, or the like may alternatively be performed on $CRC_{parity}$ and an identifier of a device.

Additionally, the network side device may generate a fifth sequence sequence5 or a sixth sequence sequence6 based on the second identifier or the first identifier of the first device and the second identifier, and the network side device scrambles $CRC_{parity}$ by using the fifth sequence or the sixth sequence, to obtain $CRC_{mask}$ = $CRC_{parity}$ (24 bits) + *sequence*5 *or sequence*6.

After receiving the PDSCH having the CRC to which the mask is added, the first device performs, by using an identifier of at least one second device, blind detection on the CRC to which the mask is added, and a second device corresponding to an identifier through which blind detection is performed successfully is used as a destination of the second information.

Additionally, it should be noted that, in addition to adding a mask to a CRC of the PDSCH of the second device, the network side device also adds a mask to a CRC of the PDSCH of the first device similarly. In this way, after receiving the PDSCH having the CRC to which the mask is added, the first device performs, by separately using the identifier of the first device and an identifier of each second device, blind detection on the CRC to which the mask is added, and determines, based on an identifier through which blind detection is performed successfully, a second device or the first device to which the CRC to which the mask is added belongs.

Based on Manner 2, the data of the first device and the data of the second device may be distinguished by adding a mask to a CRC of a PDSCH. Compared with Manner 1, in the manner, power consumption of the first device may be reduced, and complexity of distinguishing the data of the first device and the data of the second device may be reduced.

Manner 3. The network side device adds the second identifier to the first information to generate the second information. In this case, the first downlink information is specifically downlink data information such as a physical downlink shared channel (Physical Downlink Shared Channel, PDSCH). In this case, the network side device may directly add the identifier of the second device to the first information to obtain the second information.

Specifically, the network side device adds the identifier of the second device to the PDSCH to obtain the second downlink information, thereby explicitly indicating the second device to which the PDSCH belongs.

After receiving the PDSCH, the first device obtains, through parsing, the identifier of the second device from the PDSCH, and the second device corresponding to the identifier obtained through parsing is used as a final destination of the second information.

Certainly, if the PDSCH is the PDSCH of the first device, the network side device may alternatively add the identifier of the first device to the PDSCH. When the identifier obtained by the first device through parsing is the identifier of the first device, the PDSCH is the PDSCH of the first device.

According to Manner 3, a second device or the first device from which the downlink data is may be explicitly indicated.

Manner 4. The network side device adds the second identifier to the first information to generate the second information. In this case, the first information is specifically downlink control information such as a physical downlink control channel (Physical Downlink Control Channel, PDCCH), and the PDCCH includes the downlink control information DCI. In this case, an indication field may be added to the PDCCH or the DCI, and the indication field is used to indicate that a PDSCH scheduled by the DCI belongs to the second device.

Specifically, the indication field is added to the DCI, to indicate a second device or the first device to which the PDSCH scheduled by the DCI belongs, or indicate a second device or the first device to which a part of the PDSCH scheduled by the DCI belongs. When receiving the PDCCH, the first device obtains, through parsing, an identifier from the PDCCH, and identifies, based on the identifier, a second device or the first device to which the PDSCH belongs specifically.

According to Manner 4, a second device or the first device to which a data channel belongs is indicated by using a control channel.

FIG. 3 is a signaling diagram of Embodiment 2 of a data transmission method according to the present invention. In this embodiment, specifically, the data transmission method of the present invention is described in detail from the perspective of uplink data transmission. This embodiment includes the following steps.

201. A first device generates fourth information based on third information and a second identifier.

In this embodiment of the present invention, one first device may be connected to a plurality of second devices, the connection relationship may be referred to as a pairing relationship between the first device and the second devices, and both the network side device and the first device record the pairing relationship. That is, both the network side device and the first device learn an identifier of a second device paired with the first device.

In this step, the third information is information that the second device needs to send to the network side device, and may be understood as information that the second device needs to send to the network side device by using the first device. If the current sending manner is used, the first device directly sends the third information to the network side device, and subsequently the network side device does not learn the second device to which the third information belongs, or does not learn whether the third information is information of the first device. However, in this embodiment of the present invention, the second device sends the third information to the first device, and the first device generates the fourth information based on the third information and the second identifier, for example, by scrambling or indicating the third information by using the identifier of the second device.

To sum up, it can be learned that, step 201 includes the following two substeps.

2011. A second device sends the third information to the first device.

2012. The first device generates the fourth information based on the third information and the second identifier.

202. The first device sends the fourth information to a network side device.

In this step, the first device sends the generated fourth information to the network side device. In the process, the fourth information is generated by the first device based on the third information and the second identifier of the second device. Therefore, when the fourth information reaches the network side device, the network side device can identify a second device from which the fourth information is on earth. Additionally, when the first device sends information belonging to the first device to the network side device, the information may be encrypted by using an identifier of the first device, that is, a first identifier, so that the network side device identifies that the information is from the first device.

203. The network side device processes the fourth information.

In this embodiment of the present invention, a plurality of second devices may be connected to the first device. Therefore, when receiving the fourth information, the network side device may determine, in at least one second device based on the fourth information, a second device from which the fourth information is on earth. For example, the network side device performs blind detection on the fourth information separately by using identifiers of the second devices, and a second device corresponding to an identifier through which blind detection is performed successfully is a source of the fourth information. For another example, the network side device parses the fourth information, and obtains, through parsing, an identifier of a second device carried in the fourth information, that is, the second identifier, and the second device corresponding to the second identifier is a source of the second information.

In the data transmission method provided in this embodiment of the present invention, during uplink data transmission, the first device generates the fourth information based on the third information and the second identifier and sends the fourth information to the network side device. In the process, the fourth information is generated by the first device based on the third information and the second identifier of the second device. Therefore, when the fourth information reaches the network side device, the network side device can identify the second device from which the fourth information is on earth, thereby providing network quality of service different from that of the first device to the second device by distinguishing data of the first device and data of the second device.

In the foregoing embodiment, the first device sends the fourth information to the network side device. Specifically, the first device sends the fourth information to the network side device by using an independent resource, and the independent resource is allocated by the network side device to the second device. The independent resource is, for example, an independent data radio bearer (Data Radio Bearer, DRB). The network side device may allocate an independent resource to each second device, and the independent resource is used to transmit only uplink information or downlink information of the corresponding second device.

Specifically, the network side device first allocates an independent resource to the second device, and the first device sends the fourth information to the network side device by using the independent resource. In a resource allocation process, if the second device is a second device whose requirement for network quality of service is not high, the first device may send the fourth information to the network side device by using an independent resource whose quality is relatively poor, that is, the quality of the independent resource allocated by the network side device to the second device is relatively poor; or if the second device is a second device whose requirement for network quality of service is relatively high, the first device may send the fourth information to the network side device by using an independent resource whose quality is relatively good, that is, the quality of the independent resource allocated by the network side device to the second device is relatively good. Certainly, when a resource allocated by the network device to the first device is sufficient and has relatively good quality, the network side device may not need to allocate an independent resource to the second device, but send the second information by using the resource of the first device. In the process, when the first device transmits the uplink information of the second device, after the uplink information is processed by using the identifier of the second device, the uplink information is sent to the network side device by using the independent resource configured by the network side device for the second device, so that the network side device may identify the second device from which the uplink data is specifically. In this way, the data of the first device and the data of the second device are distinguished, and the data of the second device is sent by using a resource independent of the data of the first device, so that network quality of service of the second device is different from network quality of service of the first device, to satisfy different requirements of different second devices for network quality of service.

In the foregoing embodiment, the identifier of the second device may be, for example, a cell-radio network temporary identifier (Cell-Radio Network Temporary Identifier, C-RNTI) of the second device, a temporary mobile subscriber identity (Serving-Temporary Mobile Subscriber Identity, S-TMSI) of the second device, an identifier allocated by the network side device to the second device, an identifier allocated by the first device to the second device, a preconfigured identifier of the second device, or an identifier of the second device relative to the first device. How the network side device processes first downlink information by using the identifier of the second device to obtain second downlink information is described below in detail. For details of scrambling, by the first device, the third information based on the second identifier to obtain the fourth information, refer to Manner 5 and Manner 6; or, for details of adding, by the first device, the second identifier to the third information to generate the fourth information, refer to Manner 7, Manner 8, and Manner 9.

Manner 5. The first device generates a third sequence based on the second identifier, and scrambles the third information by using the third sequence to obtain the fourth information; or the first device generates a fourth sequence based on the second identifier and a first identifier of the first device and scrambles the third information by using the fourth sequence to obtain the fourth information.

For example, the third information is specifically a physical uplink shared channel (Physical Uplink Shared Channel, PUSCH). In this case, the first device may scramble the PUSCH by using the identifier of the second device to obtain the fourth information.

Specifically, the first device generates an initialization scrambling code sequence of the PUSCH, that is, a third sequence based on the identifier of the second device, and scrambles the third information by using the third sequence to obtain the fourth information.

Currently, based on a record of section 5.3.1 of 36.211 of an LTE standard, when a PUSCH is scrambled, a C-RNTI of the first device is used. If an initialization scrambling code sequence is $C_{init}$,

$$C_{init} = n_{RNTI} \cdot 2^{14} + q \cdot 2^{13} + \lfloor n_s / 2 \rfloor \cdot 2^9 + N_{ID}^{cell} \qquad forPUSCH \qquad (4)$$

where $n_{RNTI}$ is the C-RNTI of the first device, $n_s$ is a timeslot, $q$ is a code word, $q \in \{0, 1\}$, and $N_{ID}^{cell}$ indicates a cell identifier.

In this embodiment, similarly as described in Manner 1, the C-RNTI of the first device may be replaced with the identifier of the second device, that is, the second identifier, thereby obtaining a formula (5), an initialization scrambling code sequence is determined based on the formula (5), and the initialization scrambling code sequence is the third sequence. Then, the first device scrambles the third information by using the third sequence to obtain the fourth information.

$$C_{init} = (WD\ ID) \cdot 2^{14} + q \cdot 2^{13} + \lfloor n_s / 2 \rfloor \cdot 2^9 + N_{ID}^{cell} \qquad forPUSCH \qquad (5)$$

Additionally, an initialization scrambling code sequence may be further determined with reference to the identifier of the first device and the identifier of the second device, as shown in a formula (6), and the initialization scrambling code sequence is the fourth sequence. Then, the first device scrambles the third information by using the fourth sequence to obtain the fourth information.

$$C_{init} = (WD\ ID + n_{RNTI}) \cdot 2^{14} \cdot q \cdot 2^{13} + \lfloor n_s / 2 \rfloor \cdot 2^9 + N_{ID}^{cell} \qquad forPUSCH \qquad (6)$$

Based on Manner 5, the data of the first device and the data of the second device may be distinguished by scrambling the PUSCH.

In the formula (6), a description is performed by using an example in which summation is performed on *WD ID* and $n_{RNTI}$, but the present invention is not limited thereto. In another feasible implementation, subtraction, OR, XOR, or the like may alternatively be performed on *WDID* and $n_{RNTI}$.

After receiving the fourth information, the network side device performs blind detection on an initialization scrambling code sequence by using an identifier of at least one second device, and a second device corresponding to an identifier through which blind detection is performed successfully is used as an original source of the information.

Additionally, it should be noted that, in addition to scrambling a PUSCH of the second device, the first device also scrambles a PUSCH of the first device similarly. In this way, after receiving an initialization scrambling code sequence, the network side device performs blind detection on the initialization scrambling code sequence by separately using the identifier of the first device and an identifier of each second device, and determines, based on an identifier through which blind detection is performed successfully, a second device or the first device to which the initialization scrambling code sequence belongs.

Based on Manner 5, the data of the first device and the data of the second device may be distinguished by scrambling the PUSCH.

Manner 6. The first device scrambles a cyclic redundancy code CRC of the third information based on the second identifier to obtain the fourth information; the first device generates a seventh sequence based on the second identifier, and the first device scrambles the cyclic redundancy code CRC of the third information by using the seventh sequence to obtain the fourth information; or the first device generates an eighth sequence based on the second identifier and a first identifier of the first device, and the first device scrambles the cyclic redundancy code CRC of the third information by using the eighth sequence to obtain the fourth information.

For example, the third information is specifically a physical uplink shared channel PUSCH. In this case, the first device may add a mask to or scramble a cyclic redundancy code CRC of the PUSCH by using the identifier of the second device, that is, the second identifier, thereby obtaining the fourth information.

Specifically, the first device adds a mask to the cyclic redundancy code (Cyclic Redundancy Code, CRC) of the PUSCH by using the identifier of the second device, and the PUSCH to which the mask is added is the fourth information.

Currently, no mask (mask) is required during uplink data transmission. For example, parity bits of the current CRC are $p_0$, $p_1$, $p_2$, $p_3$,..., $p_{L-1}$, and the parity bits are marked as $CRC_{parity}$.

In this embodiment of the present invention, an ID of the corresponding device is added for a parity bit. For example, when the PUSCH is the PUSCH of the second device, the CRC is $CRC_{mask}$ = $CRC_{parity}$ (24bits) + WDID after a mask is added, where WD ID is, for example, 16 bits (bits), and if WD ID is less than 24 bits, zeros are added in the front, in the rear, or in the middle. For another example, when the PUSCH is the PUSCH of the first device, $CRC_{mask}$ = $CRC_{parity}$ (24 bits) + $UD$ ID, where UE ID is the identifier of the first device.

It should be noted that, although in the foregoing, the mask is added to the CRC by performing summation on $CRC_{parity}$ and an identifier of a device (the first device or the second device), but the present invention is not limited thereto. In another feasible implementation, subtraction, OR, XOR, or the like may alternatively be performed on $CRC_{parity}$ and an identifier of a device.

Additionally, the first device may generate a seventh sequence sequence7 or an eighth sequence sequence8 based on the second identifier or the first identifier of the first device and the second identifier, and the first device scrambles $CRC_{parity}$ by using the seventh sequence or the eighth sequence, to obtain $CRC_{mask}$ = $CRC_{parity}$ (24bits) + *sequence*7 or *sequence*8.

After receiving the PUSCH having the CRC to which the mask is added, the network side device performs, by using an identifier of at least one second device, blind detection on the CRC to which the mask is added, and a second device corresponding to an identifier through which blind detection is performed successfully is used as an original source of the information.

Additionally, it should be noted that, in addition to adding a mask to a CRC of the PUSCH of the second device, the first device also adds a mask to a CRC of the PUSCH of the first device similarly. In this way, after receiving the PUSCH having the CRC to which the mask is added, the network side device performs, by separately using the identifier of the first device and an identifier of each second device, blind detection on the CRC to which the mask is added, and determines, based on an identifier through which blind detection is performed successfully, a second device or the first device to which the CRC to which the mask is added belongs.

Based on Manner 6, the data of the first device and the data of the second device may be distinguished by adding a mask to a CRC of a PUSCH. Compared with Manner 1, in the manner, power consumption of the first device may be reduced, and complexity of distinguishing the data of the first device and the data of the second device may be reduced.

Manner 7. The first device adds the second identifier to the third information to generate the fourth information. In this case, the second information is specifically uplink data information such as a PUSCH. In this case, the first device may directly add the identifier of the second device to the third information to obtain the fourth information.

Specifically, the first device adds the identifier of the second device to the PUSCH to obtain the fourth information, thereby explicitly indicating the second device to which the PUSCH belongs.

After receiving the PUSCH, the network side device obtains, through parsing, the identifier of the second device from the PUSCH, and the second device corresponding to the identifier obtained through parsing is used as an original source of the fourth information.

Certainly, if the PUSCH is the PUSCH of the first device, the first device may alternatively add the identifier of the first device to the PUSCH. When the identifier obtained by the network side device through parsing is the identifier of the first device, the PUSCH is the PUSCH of the first device.

Manner 8. The first device adds the second identifier to the third information to generate the fourth information. In this case, the third information is specifically uplink control information such as a physical uplink control channel (Physical Uplink Control Channel, PUCCH). In this case, an indication field may be added to the PUCCH, and the indication field is used to indicate that a PUSCH scheduled by the PUCCH belongs to the second device.

Specifically, the indication field is added to the PUCCH, to indicate a second device or the first device to which the PUSCH scheduled by the PUCCH belongs, or indicate a second device or the first device to which a part of the PUSCH scheduled by the PUCCH belongs. When receiving the PUCCH, the network side device obtains, through parsing, an identifier from the PUCCH, and identifies, based on the identifier, a second device or the first device to which the PUSCH belongs specifically.

According to Manner 8, a second device or the first device to which a data channel belongs is indicated by using a control channel.

Manner 9. The first device adds the second identifier to the third information to generate the fourth information. In this case, the third information is specifically uplink scheduling information such as physical uplink scheduling information (Uplink grant). In this case, an indication field may be added to the Uplink grant, and the indication field is used to indicate that a PUSCH scheduled by the Uplink grant belongs to the second device.

Specifically, the indication field is added to the Uplink grant, to indicate a second device or the first device to which the PUSCH scheduled by the Uplink grant belongs, or indicate a second device or the first device to which a part of the PUSCH scheduled by the Uplink grant belongs. When receiving the Uplink grant, the first device obtains, through parsing, an identifier from the Uplink grant, and determines, based on the identifier, an uplink resource that is used by a second device or the first device, thereby transmitting uplink data of a specific device in the corresponding uplink resource, where the uplink data is to be received by the network side device.

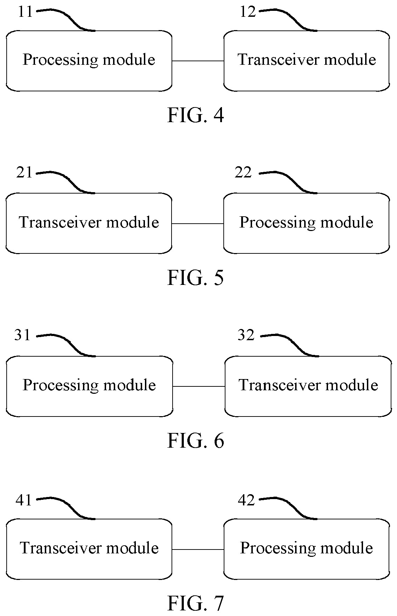

FIG. 4 is a schematic structural diagram of Embodiment 1 of a network side device according to the present invention. The network side device provided in this embodiment may implement each step of a method that is applied to a network side device and that is provided in any embodiment of the present invention. Specifically, the network side device provided in this embodiment includes:

a processing module 11, configured to generate second information based on first information and a second identifier; and

a transceiver module 12, configured to send the second information to a second device, where the second information passes through a first device, where the second device is a device accessing the network side device by using the first device, the first device is a device accessing the network side device, and the second identifier is an identifier of the second device.

In the network side device provided in this embodiment of the present invention, during downlink data transmission, the network side device generates the second information based on the first information and the second identifier and sends the second information to the second device, and in the sending process, the second information passes through the first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

Optionally, in an embodiment of the present invention, the processing module 11 is specifically configured to scramble the first information based on the second identifier to obtain the second information.

Optionally, in an embodiment of the present invention, the processing module 11 is specifically configured to generate a first sequence based on the second identifier; and scramble the first information by using the first sequence to obtain the second information.

Optionally, in an embodiment of the present invention, the processing module 11 is specifically configured to generate a second sequence based on the second identifier and a first identifier of the first device; and scramble the first information by using the second sequence to obtain the second information.

Optionally, in an embodiment of the present invention, the processing module 11 is specifically configured to scramble a cyclic redundancy code CRC of the first information based on the second identifier to obtain the second information.

Optionally, in an embodiment of the present invention, the processing module 11 is specifically configured to add the second identifier to the first information to generate the second information.

Optionally, in an embodiment of the present invention, the first information is specifically downlink data information, and the processing module 11 is specifically configured to add the second identifier to the downlink data information to generate the second information.

Optionally, in an embodiment of the present invention, the first information is specifically downlink control information, and the processing module 11 is specifically configured to add the second identifier to the downlink control information to generate the second information.

Optionally, in an embodiment of the present invention, the processing module 11 is further configured to allocate an independent resource to the second device before the transceiver module 12 sends the second information to the second device; and

the transceiver module 12 is specifically configured to send the second information to the second device by using the independent resource.

Optionally, in an embodiment of the present invention, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

FIG. 5 is a schematic structural diagram of Embodiment 1 of a second device according to the present invention. The second device provided in this embodiment may implement each step of a method that is applied to a second device and that is provided in any embodiment of the present invention. Specifically, the second device provided in this embodiment includes:

a transceiver module 21, configured to receive second information sent by a network side device, where the second information is generated by the network side device based on first information and a second identifier; and
a processing module 22, configured to process the second information, where the second device is a device accessing the network side device by using a first device, the first device is a device accessing the network side device, and the second identifier is an identifier of the second device.

In the second device provided in this embodiment of the present invention, during downlink data transmission, the network side device generates the second information based on the first information and the second identifier and sends the second information to the second device, and in the sending process, the second information passes through the first device. In the process, the second information is generated by the network side device based on the first information and the second identifier of the second device. Therefore, when the second information reaches the first device, the first device can identify the second device that is a destination of the second information. Network quality of service different from that of the first device is provided to the second device by distinguishing data of the first device and data of the second device.

Optionally, in an embodiment of the present invention, the second information is obtained by scrambling, by the network side device, the first information based on the second identifier.

Optionally, in an embodiment of the present invention, the second information is specifically obtained by generating, by the network side device, a first sequence based on the second identifier and scrambling the first information by using the first sequence.

Optionally, in an embodiment of the present invention, the second information is obtained by generating, by the network side device, a second sequence based on the second identifier and a first identifier of the first device and scrambling the first information by using the second sequence.

Optionally, in an embodiment of the present invention, the second information is obtained by scrambling, by the network side device, a cyclic redundancy code CRC of the first information based on the second identifier.

Optionally, in an embodiment of the present invention, the second information is generated by adding, by the network side device, the second identifier to the first information.

Optionally, in an embodiment of the present invention, the first information is specifically downlink data information, and the second information is generated by adding, by the network side device, the second identifier to the downlink data information.

Optionally, in an embodiment of the present invention, the first information is specifically downlink control information, and the second information is generated by adding, by the network side device, the second identifier to the downlink control information.

Optionally, in an embodiment of the present invention, the transceiver module 21 is specifically configured to receive the second information sent by the network side device by using an independent resource, where the independent resource is allocated by the network side device to the second device.

Optionally, in an embodiment of the present invention, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

FIG. 6 is a schematic structural diagram of Embodiment 1 of a first device according to the present invention. The first device provided in this embodiment may implement each step of a method that is applied to a first device and that is provided in any embodiment of the present invention. Specifically, the first device provided in this embodiment includes:

a processing module 31, configured to generate fourth information based on third information and a second identifier; and
a transceiver module 32, configured to send the fourth information to a network side device, where
the third information is information generated by a second device, the second device is a device accessing the network side device by using the first device, the first device is a device accessing the network side device, and the second identifier is an identifier of the second device.

In the first device provided in this embodiment of the present invention, during uplink data transmission, the first device generates the fourth information based on the third information and the second identifier and sends the fourth information to the network side device. In the process, the fourth information is generated by the first device based on the third information and the second identifier of the second device. Therefore, when the fourth information reaches the network side device, the network side device can identify the second device from which the fourth information is on earth, thereby providing network quality of service different from that of the first device to the second device by distinguishing data of the first device and data of the second device.

Optionally, in an embodiment of the present invention, the processing module 31 is specifically configured to scramble the third information based on the second identifier to obtain the fourth information.

Optionally, in an embodiment of the present invention, the processing module 31 is specifically configured to generate a third sequence based on the second identifier; and scramble the third information by using the third sequence to obtain the fourth information.

Optionally, in an embodiment of the present invention, the processing module 31 is specifically configured to generate a fourth sequence based on the second identifier and a first identifier of the first device; and scramble the third information by using the fourth sequence to obtain the fourth information.

Optionally, in an embodiment of the present invention, the processing module 31 is specifically configured to scramble a cyclic redundancy code CRC of the third information based on the second identifier to obtain the fourth information.

Optionally, in an embodiment of the present invention, the processing module 31 is specifically configured to add the second identifier to the third information to generate the fourth information.

Optionally, in an embodiment of the present invention, the third information is specifically uplink data information, and the processing module 31 is specifically configured to add the second identifier to the uplink data information to generate the fourth information.

Optionally, in an embodiment of the present invention, the third information is specifically uplink control information or uplink scheduling information, and the processing module 31 is specifically configured to add the second identifier to the uplink control information or the uplink scheduling information to generate the fourth information.

Optionally, in an embodiment of the present invention, the transceiver module 32 is specifically configured to send the fourth information to the network side device by using an independent resource, where the independent resource is allocated by the network side device to the second device.

Optionally, in an embodiment of the present invention, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

FIG. 7 is a schematic structural diagram of Embodiment 2 of a network side device according to the present invention. The network side device provided in this embodiment may implement each step of a method that is applied to a network side device and that is provided in any embodiment of the present invention. Specifically, the network side device provided in this embodiment includes:

a transceiver module 41, configured to receive fourth information sent by a first device, where the fourth information is generated by the first device based on third information and a second identifier; and
a processing module 42, configured to process the fourth information, where
the third information is information generated by a second device, the second device is a device accessing the network side device by using the first device, the first device is a device accessing the network side device, and the second identifier is an identifier of the second device.

In the network side device provided in this embodiment of the present invention, during uplink data transmission, the first device generates the fourth information based on the third information and the second identifier and sends the fourth information to the network side device. In the process, the fourth information is generated by the first device based on the third information and the second identifier of the second device. Therefore, when the fourth information reaches the network side device, the network side device can identify the second device from which the fourth information is on earth, thereby providing network quality of service different from that of the first device to the second device by distinguishing data of the first device and data of the second device.

Optionally, in an embodiment of the present invention, the fourth information is obtained by scrambling, by the first device, the third information based on the second identifier.

Optionally, in an embodiment of the present invention, the fourth information is specifically obtained by generating, by the first device, a third sequence based on the second identifier and scrambling the third information by using the third sequence.

Optionally, in an embodiment of the present invention, the fourth information is specifically obtained by generating, by the first device, a fourth sequence based on the second identifier and a first identifier of the first device and scrambling the third information by using the fourth sequence.

Optionally, in an embodiment of the present invention, the fourth information is specifically obtained by scrambling, by the first device, a cyclic redundancy code CRC of the third information based on the second identifier.

Optionally, in an embodiment of the present invention, the fourth information is generated by adding, by the first device, the second identifier to the third information.

Optionally, in an embodiment of the present invention, the third information is specifically uplink data information, and the fourth information is specifically generated by adding, by the first device, the second identifier to the uplink data information.

Optionally, in an embodiment of the present invention, the third information is specifically uplink control information or uplink scheduling information, and the fourth information is specifically generated by adding, by the first device, the second identifier to the uplink control information or the uplink scheduling information.

Optionally, in an embodiment of the present invention, the processing module 42 is further configured to allocate an independent resource to the second device before the transceiver module 41 receives the fourth information sent by the first device; and

the transceiver module 41 is specifically configured to receive the fourth information sent by the second device by using the independent resource.

Optionally, in an embodiment of the present invention, the second identifier includes any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

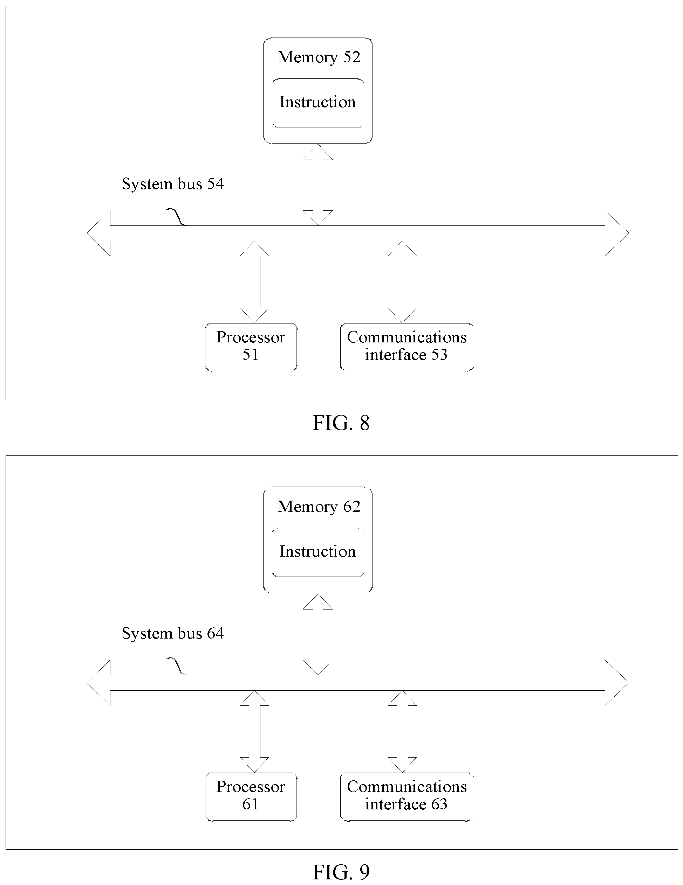

FIG. 8 is a schematic structural diagram of Embodiment 3 of a network side device according to the present invention. The network side device provided in this embodiment includes: a processor 51, a memory 52, a communications interface 53, and a system bus 54, where the memory 52 and the communications interface 53 are connected to the processor 51 by using the system bus 54 and complete mutual communication, the memory 52 is configured to store a computer executable instruction, the communications interface 53 is configured to communicate with another device, and the processor 51 is configured to run the computer executable instruction, to enable the network side device to perform each step of the method applied to a network side device in FIG. 2.

FIG. 9 is a schematic structural diagram of Embodiment 2 of a second device according to the present invention. The second device provided in this embodiment includes: a processor 61, a memory 62, a communications interface 63, and a system bus 64, where the memory 62 and the communications interface 63 are connected to the processor 61 by using the system bus 64 and complete mutual communication, the memory 62 is configured to store a computer executable instruction, the communications interface 63 is configured to communicate with another device, and the processor 61 is configured to run the computer executable instruction, to enable the second device to perform each step of the method applied to a second device in FIG. 2.

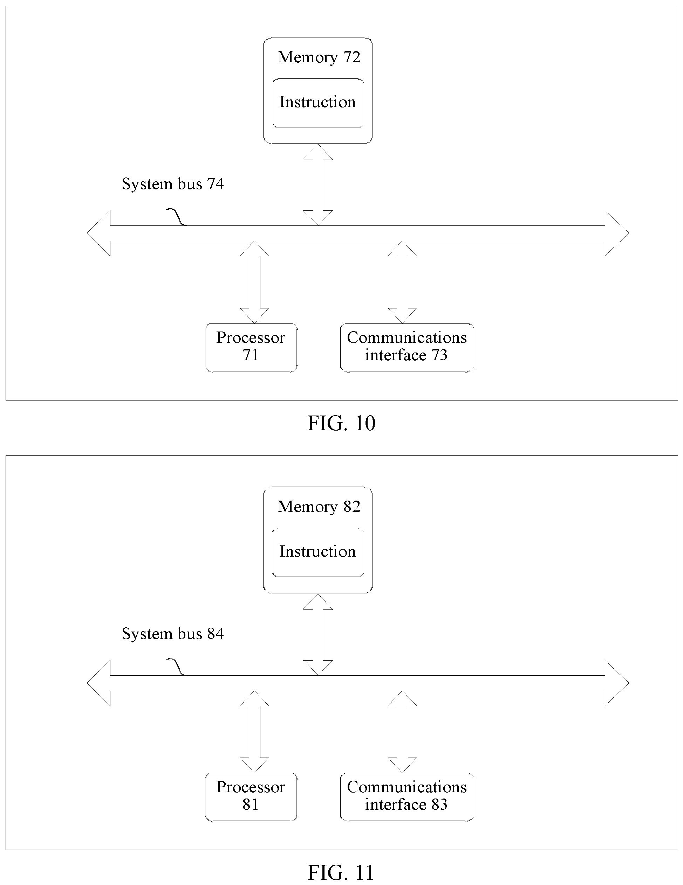

FIG. 10 is a schematic structural diagram of Embodiment 2 of a first device according to the present invention. The first device provided in this embodiment includes: a processor 71, a memory 72, a communications interface 73, and a system bus 74, where the memory 72 and the communications interface 73 are connected to the processor 71 by using the system bus 74 and complete mutual communication, the memory 72 is configured to store a computer executable instruction, the communications interface 73 is configured to communicate with another device, and the processor 71 is configured to run the computer executable instruction, to enable the first device to perform each step of the method applied to a first device in FIG. 3.

FIG. 11 is a schematic structural diagram of Embodiment 4 of a network side device according to the present invention. The network side device provided in this embodiment includes: a processor 81, a memory 82, a communications interface 83, and a system bus 84, where the memory 82 and the communications interface 83 are connected to the processor 81 by using the system bus 84 and complete mutual communication, the memory 82 is configured to store a computer executable instruction, the communications interface 83 is configured to communicate with another device, and the processor 81 is configured to run the computer executable instruction, to enable the network side device to perform each step of the method applied to a network side device in FIG. 3.

The system bus mentioned in FIG. 8 to FIG. 11 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of representation, only one thick line is used to represent the bus in the figure, but this does not mean that there is only one bus or only one type of bus. The communications interface is configured to implement communication between a database access apparatus and another device (such as a client, a read/write database, or a read-only database). The memory may include a random access memory (random access memory, RAM), or may further include a non-volatile memory (non-volatile memory) such as at least one magnetic disk memory.

The processor may be a general processor, including a central processing unit (Central Processing Unit, CPU), a network processor (Network Processor, NP), and the like; or may further be a digital signal processor (Digital Signal Processing, DSP), an application-specific integrated circuit (Application-Specific Integrated Circuit, ASIC), a field programmable gate array (Field-Programmable Gate Array, FPGA), or another programmable logical device, discrete gate or transistor logical device, or discrete hardware component.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A data transmission method, comprising:

   generating, by a network side device, second information based on first information and a second identifier; and
   sending, by the network side device, the second information to a second device, wherein the second information passes through a first device, wherein
   the second device is a device accessing the network side device by using the first device, the first device is a device accessing the network side device, and the second identifier is an identifier of the second device.

2. The method according to claim 1, wherein
   the generating, by a network side device, second information based on first information and a second identifier comprises:
   scrambling, by the network side device, the first information based on the second identifier to obtain the second information.

3. The method according to claim 2, wherein
   the scrambling, by the network side device, the first information based on the second identifier to obtain the second information comprises:

   generating, by the network side device, a first sequence based on the second identifier; and
   scrambling, by the network side device, the first information by using the first sequence to obtain the second information.

4. The method according to claim 2, wherein
   the scrambling, by the network side device, the first information based on the second identifier to obtain the second information comprises:

   generating, by the network side device, a second sequence based on the second identifier and a first identifier of the first device; and
   scrambling, by the network side device, the first information by using the second sequence to obtain the second information.

5. The method according to claim 2, wherein
   the scrambling, by the network side device, the first information based on the second identifier to obtain the second information comprises:
   scrambling, by the network side device, a cyclic redundancy code CRC of the first information based on the second identifier to obtain the second information.

6. The method according to claim 1, wherein

the generating, by a network side device, second information based on first information and a second identifier comprises:

adding, by the network side device, the second identifier to the first information to generate the second information.

7. The method according to claim 6, wherein the first information is specifically downlink data information, and the adding, by the network side device, the second identifier to the first information to generate the second information comprises:

adding, by the network side device, the second identifier to the downlink data information to generate the second information.

8. The method according to claim 6, wherein the first information is specifically downlink control information, and the adding, by the network side device, the second identifier to the first information to generate the second information comprises:

adding, by the network side device, the second identifier to the downlink control information to generate the second information.

9. The method according to any one of claims 1 to 8, wherein
before the sending, by the network side device, the second information to a second device, the method further comprises:

allocating, by the network side device, an independent resource to the second device; and
the sending, by the network side device, the second information to a second device comprises:
sending, by the network side device, the second information to the second device by using the independent resource.

10. The method according to any one of claims 1 to 9, wherein the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

11. A data transmission method, comprising:

receiving, by a second device, second information sent by a network side device, wherein the second information is generated by the network side device based on first information and a second identifier; and
processing, by the second device, the second information, wherein
the second device is a device accessing the network side device by using a first device, the first device is a device accessing the network side device, and the second identifier is an identifier of the second device.

12. The method according to claim 11, wherein
the second information is obtained by scrambling, by the network side device, the first information based on the second identifier.

13. The method according to claim 12, wherein
the second information is specifically obtained by generating, by the network side device, a first sequence based on the second identifier and scrambling the first information by using the first sequence.

14. The method according to claim 12, wherein
the second information is obtained by generating, by the network side device, a second sequence based on the second identifier and a first identifier of the first device and scrambling the first information by using the second sequence.

15. The method according to claim 12, wherein
the second information is obtained by scrambling, by the network side device, a cyclic redundancy code CRC of the first information based on the second identifier.

16. The method according to claim 11, wherein
the second information is generated by adding, by the network side device, the second identifier to the first information.

**17.** The method according to claim 16, wherein
the first information is specifically downlink data information, and the second information is generated by adding, by the network side device, the second identifier to the downlink data information.

**18.** The method according to claim 16, wherein
the first information is specifically downlink control information, and the second information is generated by adding, by the network side device, the second identifier to the downlink control information.

**19.** The method according to any one of claims 11 to 18, wherein
the receiving, by a second device, second information sent by a network side device comprises:
receiving, by the second device, the second information sent by the network side device by using an independent resource, wherein the independent resource is allocated by the network side device to the second device.

**20.** The method according to any one of claims 11 to 19, wherein the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

**21.** A data transmission method, comprising:

generating, by a first device, fourth information based on third information and a second identifier; and
sending, by the first device, the fourth information to a network side device, wherein
the third information is information generated by a second device, the second device is a device accessing the network side device by using the first device, the first device is a device accessing the network side device, and the second identifier is an identifier of the second device.

**22.** The method according to claim 21, wherein
the generating, by a first device, fourth information based on third information and a second identifier comprises:
scrambling, by the first device, the third information based on the second identifier to obtain the fourth information.

**23.** The method according to claim 22, wherein
the scrambling, by the first device, the third information based on the second identifier to obtain the fourth information comprises:

generating, by the first device, a third sequence based on the second identifier; and
scrambling, by the first device, the third information by using the third sequence to obtain the fourth information.

**24.** The method according to claim 22, wherein
the scrambling, by the first device, the third information based on the second identifier to obtain the fourth information comprises:

generating, by the first device, a fourth sequence based on the second identifier and a first identifier of the first device; and
scrambling, by the first device, the third information by using the fourth sequence to obtain the fourth information.

**25.** The method according to claim 22, wherein
the scrambling, by the first device, the third information based on the second identifier to obtain the fourth information comprises:
scrambling, by the first device, a cyclic redundancy code CRC of the third information based on the second identifier to obtain the fourth information.

**26.** The method according to claim 21, wherein the generating, by a first device, fourth information based on third information and a second identifier comprises:
adding, by the first device, the second identifier to the third information to generate the fourth information.

**27.** The method according to claim 26, wherein the third information is specifically uplink data information, and the adding, by the first device, the second identifier to the third information to generate the fourth information comprises:

adding, by the first device, the second identifier to the uplink data information to generate the fourth information.

28. The method according to claim 26, wherein the third information is specifically uplink control information or uplink scheduling information, and the adding, by the first device, the second identifier to the third information to generate the fourth information comprises:
adding, by the first device, the second identifier to the uplink control information or the uplink scheduling information to generate the fourth information.

29. The method according to claims 21 to 28, wherein
the sending, by the first device, the fourth information to a network side device comprises:
sending, by the first device, the fourth information to the network side device by using an independent resource, wherein the independent resource is allocated by the network side device to the second device.

30. The method according to any one of claims 21 to 29, wherein
the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

31. A data transmission method, comprising:

receiving, by a network side device, fourth information sent by a first device, wherein the fourth information is generated by the first device based on third information and a second identifier; and
processing, by the network side device, the fourth information, wherein
the third information is information generated by a second device, the second device is a device accessing the network side device by using the first device, the first device is a device accessing the network side device, and the second identifier is an identifier of the second device.

32. The method according to claim 31, wherein
the fourth information is obtained by scrambling, by the first device, the third information based on the second identifier.

33. The method according to claim 32, wherein
the fourth information is specifically obtained by generating, by the first device, a third sequence based on the second identifier and scrambling the third information by using the third sequence.

34. The method according to claim 32, wherein
the fourth information is specifically obtained by generating, by the first device, a fourth sequence based on the second identifier and a first identifier of the first device and scrambling the third information by using the fourth sequence.

35. The method according to claim 32, wherein
the fourth information is specifically obtained by scrambling, by the first device, a cyclic redundancy code CRC of the third information based on the second identifier.

36. The method according to claim 31, wherein
the fourth information is generated by adding, by the first device, the second identifier to the third information.

37. The method according to claim 36, wherein the third information is specifically uplink data information, and the fourth information is specifically generated by adding, by the first device, the second identifier to the uplink data information.

38. The method according to claim 36, wherein the third information is specifically uplink control information or uplink scheduling information, and the fourth information is specifically generated by adding, by the first device, the second identifier to the uplink control information or the uplink scheduling information.

39. The method according to any one of claims 31 to 38, wherein
before the receiving, by a network side device, fourth information sent by a first device, the method further comprises:

allocating, by the network side device, an independent resource to the second device; and

the receiving, by a network side device, fourth information sent by a first device comprises:

receiving, by the network side device, the fourth information sent by the second device by using the independent resource.

40. The method according to any one of claims 31 to 39, wherein
the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

41. A network side device, comprising:

a processing module, configured to generate second information based on first information and a second identifier; and
a transceiver module, configured to send the second information to a second device, wherein the second information passes through a first device, wherein the second device is a device accessing the network side device by using the first device, the first device is a device accessing the network side device, and the second identifier is an identifier of the second device.

42. The device according to claim 41, wherein
the processing module is specifically configured to scramble the first information based on the second identifier to obtain the second information.

43. The device according to claim 42, wherein
the processing module is specifically configured to generate a first sequence based on the second identifier; and scramble the first information by using the first sequence to obtain the second information.

44. The device according to claim 42, wherein
the processing module is specifically configured to generate a second sequence based on the second identifier and a first identifier of the first device; and scramble the first information by using the second sequence to obtain the second information.

45. The device according to claim 42, wherein
the processing module is specifically configured to scramble a cyclic redundancy code CRC of the first information based on the second identifier to obtain the second information.

46. The device according to claim 41, wherein
the processing module is specifically configured to add the second identifier to the first information to generate the second information.

47. The device according to claim 46, wherein the first information is specifically downlink data information, and the processing module is specifically configured to add the second identifier to the downlink data information to generate the second information.

48. The device according to claim 46, wherein the first information is specifically downlink control information, and the processing module is specifically configured to add the second identifier to the downlink control information to generate the second information.

49. The device according to any one of claims 41 to 48, wherein
the processing module is further configured to allocate an independent resource to the second device before the transceiver module sends the second information to the second device; and
the transceiver module is specifically configured to send the second information to the second device by using the independent resource.

50. The device according to any one of claims 41 to 49, wherein the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

51. A device, wherein the device is a second device, and the second device comprises:

a transceiver module, configured to receive second information sent by a network side device, wherein the second information is generated by the network side device based on first information and a second identifier; and
a processing module, configured to process the second information, wherein the second device is a device accessing the network side device by using a first device, the first device is a device accessing the network side device, and the second identifier is an identifier of the second device.

52. The device according to claim 51, wherein the second information is obtained by scrambling, by the network side device, the first information based on the second identifier.

53. The device according to claim 52, wherein the second information is specifically obtained by generating, by the network side device, a first sequence based on the second identifier and scrambling the first information by using the first sequence.

54. The device according to claim 52, wherein the second information is obtained by generating, by the network side device, a second sequence based on the second identifier and a first identifier of the first device and scrambling the first information by using the second sequence.

55. The device according to claim 52, wherein the second information is obtained by scrambling, by the network side device, a cyclic redundancy code CRC of the first information based on the second identifier.

56. The device according to claim 51, wherein the second information is generated by adding, by the network side device, the second identifier to the first information.

57. The device according to claim 56, wherein the first information is specifically downlink data information, and the second information is generated by adding, by the network side device, the second identifier to the downlink data information.

58. The device according to claim 56, wherein
the first information is specifically downlink control information, and the second information is generated by adding, by the network side device, the second identifier to the downlink control information.

59. The device according to claims 51 to 58, wherein
the transceiver module is specifically configured to receive the second information sent by the network side device by using an independent resource, wherein the independent resource is allocated by the network side device to the second device.

60. The device according to any one of claims 51 to 59, wherein the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

61. A device, wherein the device is a first device, and the first device comprises:

a processing module, configured to generate fourth information based on third information and a second identifier; and
a transceiver module, configured to send the fourth information to a network side device, wherein
the third information is information generated by a second device, the second device is a device accessing the network side device by using the first device, the first device is a device accessing the network side device, and the second identifier is an identifier of the second device.

62. The device according to claim 61, wherein
the processing module is specifically configured to scramble the third information based on the second identifier to obtain the fourth information.

**63.** The device according to claim 62, wherein
the processing module is specifically configured to generate a third sequence based on the second identifier; and scramble the third information by using the third sequence to obtain the fourth information.

**64.** The device according to claim 62, wherein
the processing module is specifically configured to generate a fourth sequence based on the second identifier and a first identifier of the first device; and scramble the third information by using the fourth sequence to obtain the fourth information.

**65.** The device according to claim 62, wherein
the processing module is specifically configured to scramble a cyclic redundancy code CRC of the third information based on the second identifier to obtain the fourth information.

**66.** The device according to claim 61, wherein
the processing module is specifically configured to add the second identifier to the third information to generate the fourth information.

**67.** The device according to claim 66, wherein the third information is specifically uplink data information, and the processing module is specifically configured to add the second identifier to the uplink data information to generate the fourth information.

**68.** The device according to claim 66, wherein the third information is specifically uplink control information or uplink scheduling information, and the processing module is specifically configured to add the second identifier to the uplink control information or the uplink scheduling information to generate the fourth information.

**69.** The device according to any one of claims 61 to 68, wherein
the transceiver module is specifically configured to send the fourth information to the network side device by using an independent resource, wherein the independent resource is allocated by the network side device to the second device.

**70.** The device according to any one of claims 61 to 69, wherein
the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

**71.** A network side device, comprising:

a transceiver module, configured to receive fourth information sent by a first device, wherein the fourth information is generated by the first device based on third information and a second identifier; and
a processing module, configured to process the fourth information, wherein
the third information is information generated by a second device, the second device is a device accessing the network side device by using the first device, the first device is a device accessing the network side device, and the second identifier is an identifier of the second device.

**72.** The device according to claim 71, wherein the fourth information is obtained by scrambling, by the first device, the third information based on the second identifier.

**73.** The device according to claim 72, wherein the fourth information is specifically obtained by generating, by the first device, a third sequence based on the second identifier and scrambling the third information by using the third sequence.

**74.** The device according to claim 72, wherein the fourth information is specifically obtained by generating, by the first device, a fourth sequence based on the second identifier and a first identifier of the first device and scrambling the third information by using the fourth sequence.

**75.** The device according to claim 72, wherein the fourth information is specifically obtained by scrambling, by the first device, a cyclic redundancy code CRC of the third information based on the second identifier.

**76.** The device according to claim 71, wherein the fourth information is generated by adding, by the first device, the second identifier to the third information.

**77.** The device according to claim 76, wherein the third information is specifically uplink data information, and the fourth information is specifically generated by adding, by the first device, the second identifier to the uplink data information.

**78.** The device according to claim 76, wherein the third information is specifically uplink control information or uplink scheduling information, and the fourth information is specifically generated by adding, by the first device, the second identifier to the uplink control information or the uplink scheduling information.

**79.** The device according to any one of claims 71 to 78, wherein
the processing module is further configured to allocate an independent resource to the second device before the transceiver module receives the fourth information sent by the first device; and
the transceiver module is specifically configured to receive the fourth information sent by the second device by using the independent resource.

**80.** The device according to any one of claims 71 to 79, wherein the second identifier comprises any one of the following identifiers: a cell-radio network temporary identifier C-RNTI of the second device, a temporary mobile subscriber identity S-TMSI of the second device, an identifier allocated by the network side device to the second device, an identifier allocated by the first device to the second device, a preconfigured identifier of the second device, or an identifier of the second device relative to the first device.

**81.** A network side device, comprising: a processor, a memory, a communications interface, and a system bus, wherein the memory and the communications interface are connected to the processor by using the system bus and complete mutual communication, the memory is configured to store a computer executable instruction, the communications interface is configured to communicate with another device, and the processor is configured to run the computer executable instruction, to enable the network side device to perform the method according to any one of claims 1 to 10.

**82.** A device, wherein the device is a second device, and the second device comprises: a processor, a memory, a communications interface, and a system bus, wherein the memory and the communications interface are connected to the processor by using the system bus and complete mutual communication, the memory is configured to store a computer executable instruction, the communications interface is configured to communicate with another device, and the processor is configured to run the computer executable instruction, to enable the second device to perform the method according to any one of claims 11 to 20.

**83.** A device, wherein the device is a first device, and the first device comprises:
a processor, a memory, a communications interface, and a system bus, wherein the memory and the communications interface are connected to the processor by using the system bus and complete mutual communication, the memory is configured to store a computer executable instruction, the communications interface is configured to communicate with another device, and the processor is configured to run the computer executable instruction, to enable the first device to perform the method according to any one of claims 21 to 30.

**84.** A network side device, comprising: a processor, a memory, a communications interface, and a system bus, wherein the memory and the communications interface are connected to the processor by using the system bus and complete mutual communication, the memory is configured to store a computer executable instruction, the communications interface is configured to communicate with another device, and the processor is configured to run the computer executable instruction, to enable the network side device to perform the method according to any one of claims 31 to 40.

FIG. 1

| Network side device | First device | | Second device |

101. Generate second information based on first information and a second identifier

102

—1021. Second information→

—1022. Second information→

103. Process the second information

FIG. 2

| Second device | First device | 201 | Network side device |

—2011. Third information→

2012. Generate fourth information based on the third information and a second identifier

——202. Fourth information——→

203. Process the fourth information

FIG. 3

11

12

| Processing module | Transceiver module |

FIG. 4

21

22

| Transceiver module | Processing module |

FIG. 5

31

32

| Processing module | Transceiver module |

FIG. 6

41

42

| Transceiver module | Processing module |

FIG. 7

Memory 52

Instruction

System bus 54

Processor
51

Communications
interface 53

FIG. 8

Memory 62

Instruction

System bus 64

Processor
61

Communications
interface 63

FIG. 9

Memory 72

Instruction

System bus 74

Processor 71

Communications interface 73

FIG. 10

Memory 82

Instruction

System bus 84

Processor 81

Communications interface 83

FIG. 11

# INTERNATIONAL SEARCH REPORT

| International application No. |
| --- |
| PCT/CN2017/088509 |

## A. CLASSIFICATION OF SUBJECT MATTER

H04W 28/02 (2009.01) i

According to International Patent Classification (IPC) or to both national classification and IPC

## B. FIELDS SEARCHED

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT, CNKI, WPI, EPODOC: low performance, low ability, bracelet, watch, connect, surf the internet, network, access, mobile network, wireless network, sign, identify, distinguish, address, add, scrambling, base station, AP, wear+, network, system, information, signal, message, packet, ID, RNTI, TMSI, IP, equipment

## C. DOCUMENTS CONSIDERED TO BE RELEVANT

| Category* | Citation of document, with indication, where appropriate, of the relevant passages | Relevant to claim No. |
| --- | --- | --- |
| X | CN 102469509 A (CHINA MOBILE COMMUNICATIONS CORPORATION) 23 May 2012 (23.05.2012) claims 1-15, and description, paragraphs [0005]-[0014] | 1-84 |
| X | CN 102624935 A (HUAWEI TECHNOLOGIES CO., LTD.) 01 August 2012 (01.08.2012) description, paragraphs [0005]-[0009] | 21-40, 61-80, 83, 84 |
| A | CN 105119844 A (CHINA UNICOM GROUP CO., LTD.) 02 December 2015 (02.12.2015) the whole document | 1-84 |
| A | WO 2016099227 A1 (SAMSUNG ELECTRONICS CO., LTD.) 23 June 2016 (23.06.2016) the whole document | 1-84 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 08 August 2017 | 30 August 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Feng Telephone No. (86-10) 62413247 |
| --- | --- |

Form PCT/ISA /210 (second sheet) (July 2009)

## INTERNATIONAL SEARCH REPORT
Information on patent family members

International application No.

PCT/CN2017/088509

| Patent Documents referred in the Report | Publication Date | Patent Family | Publication Date |
|---|---|---|---|
| CN 102469509 A | 23 May 2012 | WO 2012059049 A1 | 10 May 2012 |
| | | CN 102469410 A | 23 May 2012 |
| CN 102624935 A | 01 August 2012 | WO 2012100531 A1 | 02 August 2012 |
| CN 105119844 A | 02 December 2015 | None | |
| WO 2016099227 A1 | 23 June 2016 | None | |

Form PCT/ISA /210 (patent family annex) (July 2009)